# FASCICULE DE BREVET EUROPEEN

(11) **EP 0 482 971 B1**
(45) Date de publication et mention de la délivrance du brevet: **05.06.1996**
(21) Numéro de dépôt: 91402539.0
(22) Date de dépôt: 24.09.1991
(51) Int. Cl.: C08L 95/00

(54) **Enrobé routier de revêtement et sa fabrication**
Strassenbelag und seine Herstellung
Road surface and its preparation

(30) Priorité: 25.10.1990 FR 9013242
(43) Date de publication de la demande: 29.04.1992
(73) Titulaire: SCREG, F-78065 St Quentin-En-Yvelines (FR)
(72) Inventeur: Galera, Vincent, F-92260 Fontenay-Aux-Roses (FR)
(74) Mandataire: Polus, Camille

(56) Documents cités:
- FR-A- 2 228 894
- US-A- 3 093 500

## Description

La présente invention a pour objet un enrobé routier de revêtement ou béton hydrocarboné résistant aux hydrocarbures et sa fabrication.

L'invention concerne plus particulièrement des revêtements du type "anti-kérosène" pour routes ou aérodromes, consistant en un enrobé à base de granulats minéraux et de liant très résistant. Ainsi on a déjà proposé notamment selon FR-A-2 228 894 et FR-A-2 290 483 d'utiliser comme liant un brai ou un goudron éventuellement fluxé à de l'huile anthracénique et additionné d'un polymère ou copolymère de chlorure de vinyle, c'est-à-dire un liant du type "brai-vinyle" ou "goudron-vinyle". Bien que souvent satisfaisants, ces produits s'avèrent insuffisants pour supporter sans déformation une circulation importante d'avions gros-porteurs ou de poids lourds, notamment en présence de kérosène ou d'huile qui sont généralement absorbés par les liants contenus dans les revêtements.

On a maintenant trouvé une composition de liant particulièrement résistant qui convient dans la fabrication d'un enrobé routier pour revêtements de pistes d'aéroports, parkings de poids lourds, halls industriels, etc.

L'invention concerne donc un enrobé routier de revêtement résistant aux hydrocarbures, comprenant des granulats minéraux enrobés de 6 à 10% en poids d'un liant à base de goudron ou brai de houille additionné ou non d'un polymère vinylique, caractérisé en ce que le liant comprend aussi un bitume naturel ayant un point de ramolissement bille-anneau supérieur à 100°C et une pénétrabilité à l'aiguille à 25°C inférieure ou égale à 1 mm.

Les granulats minéraux utilisés sont des mélanges de type classique de gravillons, de sable et de fillers, par exemple du 0/14 mm. L'originalité de l'invention consiste essentiellement dans l'utilisation d'un liant "double" comprenant le mélange d'un (A) bitume naturel du type asphalte, exceptionnellement dur, riche en asphaltène (plus de 30%), tel que la gilsonite, et un (B) goudron ou un brai de houille de préférence modifié par 5 à 30% de polymère ou copolymère vinylique (notamment PVC), dans un rapport pondéral A : B allant de 1:7 à 1:2, en particulier 1:6 à 1:3.

L'enrobé selon l'invention comprend avantageusement de 7 à 8% en poids de liant à base de gilsonite et d'un brai-vinyle ayant une température d'équiviscosité (E.V.T.) d'au moins 40°C, et de préférence d'au moins 60°C (correspondant à une pénétration standard de 0,1 mm à 25°C).

L'enrobé selon l'invention peut être fabriqué en centrale par introduction successive ou en continu dans un malaxeur des granulats minéraux, du bitume et du goudron ou brai (modifié ou non par un vinyle), puis malaxage à 140 à 180°C, notamment à environ 160°C pendant 20 à 30s.

L'ajout d'un asphalte tel que la gilsonite dans le goudron-vinyle ou dans le brai de houille donne au liant obtenu des caractéristiques tout-à-fait intéressantes :
- dureté du produit enrobé (Module E de l'ordre de 20. 000 MPa),
- insensibilisation aux températures élevées; fabriqué à 160°C, le liant obtenu garde toutes ses propriétés, ce qui n'est pas le cas d'un goudron-vinyle qui "brûle" au-delà de 145 à 150°C. Cette nouvelle propriété est essentielle à la bonne réussite de ce type de produit; en effet en centrale on ne peut éviter les coups de chauffe qui provoquent la dégradation immédiate des liants anti-kérosène de l'état actuel de la technique;
- d'autre part, l'asphalte confère à l'enrobé plus de maniabilité et donc une facilité de mise en oeuvre très fortement améliorée.

### EXEMPLE

On a fabriqué un enrobé avec des granulats minéraux ayant la composition centésimale suivante :

| | |
|---|---|
| 10/14 (mm) diorite | 22% |
| 6/10 (mm) diorite | 20% |
| 2/6 (mm) diorite | 21% |
| 0/2 (mm) diorite | 36% |
| filler calcaire | 1% |

et on les a introduits dans un malaxeur avec 7,5% en poids d'un liant comprenant 25% de gilsonite (soit 1,87%) et 75% de Stavojet (soit 5,63%) qui est un brai-vinyle ayant une E.V.T. de 60-62°C commercialisé par la société HGD. On malaxe pendant 30s à une température d'environ 160°C.

Caractéristiques physiques de l'enrobé ainsi obtenu :

| | |
|---|---|
| Masse volumique réelle : | 2,669 kg/dm³ |
| Masse volumique apparente : | 2,50 kg/dm³ |
| Compacité : | 93,7 kg/cm³ |

| PERFORMANCE | |
|---|---|
| Résistance compression | (MPa) |
| (essai Duriez) | |
| A sec, 18°C : | 35,5 (C) |
| 50°C : | 10,8 |
| Immersion 18°C dans le kérosène : | 31,3 (I) |
| Rapport I/C = 0,88 | |

| Résistance à la traction, dit essai brésilien | (MPa) |
|---|---|
| à 18°C : | 10,7 |

Etant donné les caractéristiques obtenues, le produit selon l'invention est particulièrement utile comme revêtement de sols soumis aux agressions d'hydrocarbures pétroliers et d'engins lourds, donc de pistes d'aéroports, de routes ou de parkings pour poids-lourds, parcs de stationnement d'engins chenillés, d'hélicoptères, et d'avions, et ateliers industriels, etc. A cet effet, l'enrobé selon l'invention peut être mis en oeuvre notamment en des couches de 6 à 10 cm d'épaisseur.

## Revendications

1. Enrobé routier de revêtement résistant aux hydrocarbures, comprenant des granulats minéraux enrobés de 6 à 10% en poids d'un liant comprenant du goudron ou du brai de houille, additionné ou non d'un polymère vinylique, caractérisé en ce que le liant comprend aussi un bitume naturel ayant un point de ramollissement bille-anneau supérieur à 100°C et une pénétrabilité à l'aiguille à 25°C inférieure ou égale à 1 mm, le rapport pondéral du bitume naturel au goudron ou au brai de houille étant de 1:7 à 1:2.

2. Enrobé selon la revendication 2, caractérisé en ce que le bitume naturel et le goudron-vinyle ou brai-vinyle sont dans un rapport pondéral de 1:6 à 1:3.

3. Enrobé selon l'une des revendications 1 à 3, caractérisé en ce que le bitume naturel est de la gilsonite.

4. Enrobé selon l'une des revendications 1 à 4, caractérisé en ce qu'il comprend 7 à 8% en poids de liant.

5. Procédé de fabrication de l'enrobé selon l'une quelconque des revendications 1 à 5, caractérisé en ce que l'on introduit dans un malaxeur successivement ou en continu les granulats, le bitume et le goudron ou brai et on malaxe de 140 à 180°C pendant 20 à 30s.

6. Utilisation de l'enrobé selon l'une quelconque des revendications 1 à 5 dans la réalisation de pistes d'aéroport, parkings pour poids-lourds et halls industriels.

## Patentansprüche

1. Straßendecke mit einem gegenüber Kohlenwasserstoffen widerständigen Belag, mit mineralischen Granulaten, die mit 6 bis 10 Gew.-% eines Binders umhüllt sind, der Teer oder Teerpech enthält und zu dem ein Vinylpolymer hinzugefügt ist oder nicht, dadurch gekennzeichnet, daß der Binder außerdem natürlichen Asphalt enthält, der einen Kugel-Ring-Erweichungspunkt oberhalb von 100 °C sowie eine Nadelpenetration bei 25 °C besitzt, die kleiner oder gleich 1 mm ist, wobei das Gewichtsverhältnis des natürlichen Asphalts zu Teer oder Teerpech im Bereich 1:7 bis 1:2 liegt.

2. Decke nach Anspruch 1, dadurch gekennzeichnet, daß der natürliche Asphalt und das Teer-Vinyl oder Teerpech-vinyl in einem Gewichtsverhältnis im Bereich 1:6 bis 1:3 vorliegen.

3. Decke nach einem der Ansprüche 1 bis 2, dadurch gekennzeichnet, daß der natürliche Asphalt Gilsonit ist.

4. Decke nach einem der Ansprüche 1 bis 3, dadurch gekennzeichnet, daß sie 7 bis 8 Gew.-% des Binders enthält.

5. Verfahren zum Herstellen der Decke nach irgendeinem der Ansprüche 1 bis 4, dadurch gekennzeichnet, daß in einem Mischer nacheinander oder kontinuierlich die Granulate, der Asphalt und der Teer oder das Teerpech eingeleitet werden und daß bei 140 bis 180 °C während 20 bis 30 s gemischt wird.

6. Verwendung der Decke nach irgendeinem der Ansprüche 1 bis 5 bei der Verwirklichung von Start- und Landebahnen für Flugzeuge, Parkplätzen für Schwerlastfahrzeuge und Industriehallen.

## Claims

1. Hydrocarbon-resistant road surfacing mixture, comprising granulated mineral materials coated with 6 to 10% by weight of a binder comprising tar or coal tar pitch, to which a vinyl polymer may or may not be added, characterised in that the binder also comprises a natural bitumen having a ball-ring softening point above 100°C and a needle penetrability at 25°C of less than or equal to 1 mm, the weight ratio of natural bitumen to pitch or coal tar being from 1:7 to 1:2.

2. Coating mixture according to claim 2, characterised in that the natural bitumen and the tar-vinyl or tar pitch-vinyl are present in a ratio by weight of 1:6 to 1:3.

3. Coating mixture according to one of claims 1 to 3, characterised in that the natural bitumen is gilsonite.

4. Coating mixture according to one of claims 1 to 4, characterised in that it comprises 7 to 8% by weight of binder.

5. Process for producing the coating mixiture according to any one of claims 1 to 5, characterised in that the granulated materials, bitumen and tar or tar pitch are introduced into a mixer successively or continuously and mixed at 140 to 180°C for 20 to 30 seconds.

6. Use of the coating mixture according to any one of claims 1 to 5 in the construction of airport runways, parking areas for heavy vehicles and industrial hangars.
